# EUROPEAN PATENT APPLICATION

(11) **EP 3 923 549 A1**
(43) Date of publication of application: **15.12.2021**
(21) Application number: 20754857.9
(22) Date of filing: 11.02.2020
(51) Int. Cl.: H04L 29/08, H04W 76/15

(54) **DATA DOWNLOADING METHOD AND RELATED APPARATUS**

(30) Priority: 11.02.2019 CN 201910110311
(71) Applicant: GUANGDONG OPPO MOBILE TELECOMMUNICATIONS CORP., LTD., Dongguan, Guangdong 523860 (CN)
(72) Inventor: HUANG, Yuan, Dongguan, Guangdong 523860 (CN)
(74) Representative: Taor, Simon Edward William
(86) International application number: PCT/CN2020/074730
(87) International publication number: WO 2020/164476

(57) **Abstract**

Methods for data downloading and a related terminal device are provided, which include, upon receiving a downloading instruction input by a user, determining a target downloading task and determining communication protocols currently supported by the terminal device. The target downloading task can be divided into a plurality of subtasks based on preset ways. At least two communication protocols from the communication protocols currently supported by the terminal device are selected as target communication protocols. Downloading of the plurality of subtasks is based on the target communication protocols.

## Description

### TECHNICAL FIELD

The present disclosure relates to the field of terminal device, in particular to a method for downloading data and a terminal device.

### BACKGROUND

With the development of science and technology, the performance of terminal devices becomes more and more powerful, and there have been large leaps in the performance of computing and the capabilities of communicating.

The current terminal devices usually support various communicating protocols, such as Wi-Fi (wireless fidelity) technology, cellular network technology, Bluetooth communication and infrared communication, for example. In different scenarios, users are able to communicate by selecting different communication protocols.

However, when users are downloading data, they usually download data through one kind of communication protocol supported by a terminal device, resulting in lower efficiency and negative user experience.

### SUMMARY

Various embodiments provide a method and terminal device for downloading data.

Some embodiments provide a data downloading method for a terminal device, the method comprising: in response to receiving a downloading instruction input by a user, determining a target downloading task and determining communication protocols currently supported by the terminal device; dividing the target downloading task into a plurality of subtasks based on preset ways; selecting at least two communication protocols from the communication protocols currently supported by the terminal device as target communication protocols; and downloading the plurality of subtasks based on the target communication protocols.

Some embodiments provide a terminal device comprising: one or more processors; a memory; and one or more programs. The one or more programs include instructions stored in the memory and are configured to be executed by the one or more processors for: in response to receiving a downloading instruction input by a user, determining a target downloading task and determine communication protocols currently supported by the terminal device; in response to dividing the target downloading task into a plurality of subtasks based on preset ways; selecting at least two communication protocols from the communication protocols currently supported by the terminal device as target communication protocols; and downloading the plurality of subtasks based on the target communication protocols.

Some embodiments provide a non-transitory computer-readable storage medium comprising program instructions for causing a terminal device to perform at least the following:in response to receiving a downloading instruction input by a user, determining a target downloading task and determining communication protocols currently supported by the terminal device; dividing the target downloading task into a plurality of subtasks based on preset ways; selecting at least two communication protocols from the communication protocols currently supported by the terminal device as target communication protocols; and downloading the plurality of subtasks based on the target communication protocols

### BRIEF DESCRIPTION OF THE DRAWINGS

The present disclosure, in accordance with one or more various embodiments, is described in detail with reference to the following figures. The figures are provided for purposes of illustration only and merely depict typical or example embodiments.
FIG. 1 is a schematic diagram of a system architecture of a wireless communication system where a terminal device locates.
FIG. 2 is a flow chart of a data downloading method according to an embodiment of the present disclosure.
FIG. 3 is another flow chart of a data downloading method according to an embodiment of the present disclosure.
FIG. 4 is another flow chart of a data downloading method according to an embodiment of the present disclosure.
FIG. 5 is a block diagram of functional units of a downloading component according to an embodiment of the present disclosure.
FIG. 6 is another block diagram of functional units of a downloading component according to an embodiment of the present disclosure.
FIG. 7 is another block diagram of functional units of a downloading component according to an embodiment of the present disclosure.
FIG. 8 is a structural diagram of a downloading apparatus according to an embodiment of the present disclosure.

### DETAILED DESCRIPTION

In order to enable any person skilled in the art to better understand the present disclosure, the technical solution in the embodiments will be clearly and completely described below in combination with the accompanying drawings in the embodiments. Obviously, the described embodiments are only part of the embodiments and not all of the embodiments. On the basis of the embodiments in the present disclosure, all other embodiments which are available to any person skilled in the art without having performed inventive work are covered by the present disclosure.

The terms "first", "second", etc. in the specification and claims of the present disclosure and in the appending drawings are used to distinguish between different objects and are not used to describe any particular order. Furthermore, the terms "including" and "having" and any variation of them are intended to cover non-exclusive inclusion. For example, a process, method, system, product, or equipment that includes of a series of steps or units is not limited to the listed steps or units, but optionally includes steps or units not listed, or optionally includes other steps or units that are inherent to such process, method, product, or equipment.

Reference to embodiments herein implies that specific features, structures or features described in combination with embodiments may be included in at least one of the embodiments of the present disclosure. The term embodiment as used herein does not necessarily refer to the same embodiment, nor is it necessarily a separate or alternative embodiment that is mutually exclusive with other embodiments. What is understood, both explicitly and implicitly, by any person skilled in the art is that the embodiments described herein may be combined with other embodiments.

Link aggregation means that devices can use two or more network ports to access the Internet at the same time, such as using Wi-Fi and a data network for network access through link aggregation on mobile phones. The Android network system, when Wi-Fi is enabled, makes the data network unusable (the Connectivity Service network scoring mechanism causes the data network to be disconnected), and link aggregation requires at least two or more available networks, so the premise of a Service-Level Agreement (SLA) is that Wi-Fi and data networks co-exist.

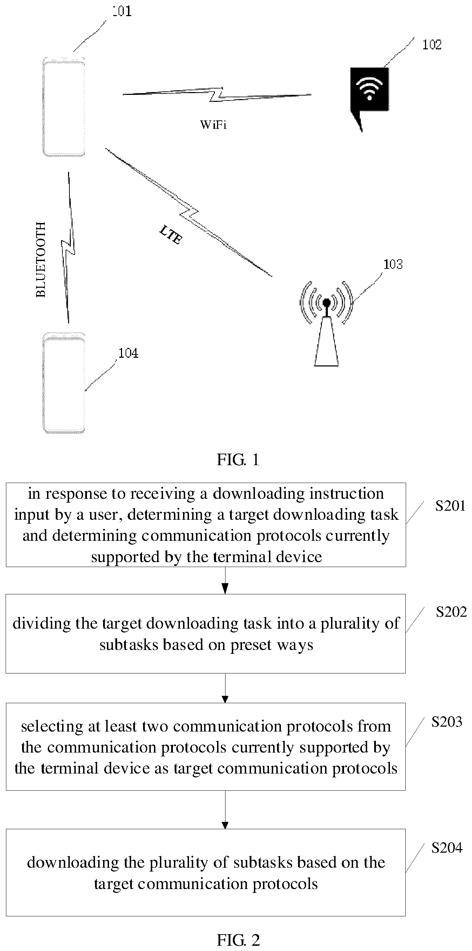

As shown in FIG. 1, a first terminal device 101 can connect to data network 103, which is a communication network used for data transmission business. The first terminal device can connect to access point 102 through Wi-Fi. Wi-Fi is the technology that allows the first terminal device 101 to connect to a wireless local area network. Usually, Wi-Fi communications occur over the 2.4G UHF or 5G SHF ISM radio frequency band. The first terminal device 101 can connect to a second terminal device 104 through Bluetooth. Bluetooth refers to a wireless technology standard that enables short-range data exchange (using UHF radio waves in the ISM band from 2.4 to 2.485GHz) between fixed devices, mobile devices and for building personal domain networks.

In view of the above problems, a method for data downloading applied to terminal devices is disclosed.

FIG. 2 is a flow diagram illustrating example operations of a method for data downloading, applied to terminal devices, in accordance with at least one embodiment.

At block S201, the terminal device receives a downloading instruction input by a user, determines a target downloading task and determines communication protocols currently supported by the terminal device.

In some embodiments, terminal devices, of the present disclosure may be mobile terminals, servers, handheld devices and other terminal devices with communication functions. Common mobile terminals include mobile phones, smart wearable devices, etc.

In some embodiments, the user can input commands by pressing a button, mouse, touch screen, or voice.

In some embodiments, the determination of the target downloading task can include obtaining a downloading request of the user based on a user agent through a hypertext transfer protocol, and parsing the downloading request so as to obtain target downloading task. For example, the downloading task could be a movie, a game, an e-book, or a piece of music. For another example, the downloading task could be a package that contains one or more movies, games, applications, and music.

In some embodiments, the terminal device determines the communication protocol currently supported by the terminal device, which can include: traversing a device management list of the terminal device; determining the communication protocols recorded in the device management list as the communication protocols currently supported by the terminal device.

In some embodiments, the communication protocols currently supported by the terminal device include wireless fidelity communication protocol, cellular network communication protocol, Bluetooth communication protocol and infrared communication protocol. Embodiments disclosed herein are not necessarily limited to operating in accordance with these noted protocols.

At block S202, the terminal device divides the target downloading task into a plurality of subtasks based on preset ways.

In some embodiments, for example, the target downloading task can be divided into multiple subtasks based on the number of bytes. For example, if the target downloading task is 50,000 bytes in total, and every 10,000 bytes is divided into a subtask, the target downloading task can be divided into five subtasks. Understandably, the number of bytes each subtask contains can be set in advance or by users.

In some embodiments, for example, the target task can also be divided into multiple subtasks based on the percentage of tasks. For example, the original target task can be divided into five subtasks, each of which is 20 percent of the total task size. The percentage of each subtask in the total task volume can be set in advance or can be set by users.

In some embodiments, for example, multiple subtasks can be established based on the number of current communication protocols acquired. For example, if the communication protocols currently supported by the terminal device include wireless fidelity communication protocol, cellular network communication protocol, Bluetooth communication protocol and infrared communication protocol, all of which can be used to download the target task, then four subtasks can be established. The percentage of each subtask can be either preset or set by the user. For example, the target task can be divided equally into multiple subtasks based on the number of communication protocols currently supported by the terminal device.

Optionally, the target task can also be divided into multiple subtasks based on the network rate ratio of the currently supported communication protocol.

Optionally, the target task can also be divided into multiple subtasks based on the signal strength ratio of the currently supported communication protocol.

Optionally, the target task can also be divided into multiple subtasks based on the network bandwidth ratio of the currently supported communication protocol.

Optionally, the target task can also be divided into multiple subtasks based on the category of the target task. Such as movies for cellular networks, songs for Wi-Fi.

Optionally, the target task can also be divided into multiple subtasks based on collections, such as movies, games, music, and applications for downloading tasks. The mapping method of the set is as follows: movies, games and other tasks are downloaded through wireless fidelity technology, while music and applications are downloaded through cellular network technology. That is, each communication protocol corresponds to one or more task types.

At block S203, the terminal device selects at least two communication protocols from the communication protocols currently supported by the terminal device as target communication protocols.

In some embodiments, at least two communication protocols are selected from the communication protocols currently supported by the terminal device as the target communication protocol, including: ranking the priority of each communication protocol based on the frequency used by each communication protocol recorded in the terminal device; select at least two communication protocols as the target communication protocol based on the results of the ranking.

In some embodiments, the terminal device selects at least two communication protocols from the communication protocols currently supported by the terminal device as target communication protocols. This may be accomplished by: detecting downloading speed of each communication protocol supported by the terminal device based on preset duration; sorting priorities of each communication protocol based on the downloading speed of each communication protocol recorded by the terminal device; selecting at least two communication protocols as the target communication protocols based on a result of the sorting. The preset duration can be preset or set by users. Optionally, the preset duration can also be updated based on the downloading speed of the current target task. For example, if the downloading speed of the current target task is lower, indicating the downloading speed of the current communication protocol supported by the terminal device may vary, then a prompt can be sent to users, whether or not to get prioritization of the communication protocols, or whether to re-select the target communication protocol.

At block S204, the terminal device downloads the plurality of subtasks based on the target communication protocols.

In some embodiments, the process of downloading is carried out through the target communication protocol, which can include: distributing the plurality of subtasks to the data link corresponding to the target communication protocols; receiving data streams transmitted through the data link corresponding to the target communication protocols; and aggregating the received data streams so as to obtain data corresponding to the target downloading task.

In some embodiments, the terminal device distributes the plurality of subtasks to the data link corresponding to the target communication protocols by: determining a bandwidth of each communication protocol in the target communication protocols; and proportionally distributing subtasks based on the bandwidth of each communication protocol to the data link corresponding to each communication protocol. For example, a communication protocol with larger bandwidth is allocated a larger number of subtasks, while a communication protocol with smaller bandwidth is allocated a smaller number of subtasks.

In some embodiments, the terminal device aggregates the received data streams so as to obtain data corresponding to the target downloading task by: determining serial numbers of the received data streams based on serial numbers of the plurality of subtasks; and joining the received data streams based on the serial numbers of the received data streams so as to obtain data corresponding to the target downloading task.

In some embodiments, after the terminal device downloads the plurality of subtasks based on the target communication protocols, the method further comprises: determining a target duration based on a current communication protocol and a volume of the downloading task; and if a notification of successful downloading after the target duration is not received, downloading the target downloading task based on the current communication protocol through a single stream. Users can select the current communication mode with the best downloading speed for single stream downloading. Optionally, a prompt can be sent to users in the user interface for the user to select a communication mode for single stream downloading.

In some embodiments, when the terminal device receives a downloading instruction from the user, the target downloading task and the communication protocol currently supported by the terminal device are determined; the target downloading task is divided into a plurality of subtasks based on preset ways; the terminal device selects at least two communication protocols from the communication protocols currently supported by the terminal device as the target communication protocol; and the downloading of the plurality of subtasks is carried out through the target communication protocol. Compared with traditional single stream downloading, various embodiments can effectively improve the flexibility and intelligence of network control when downloading tasks, and then improve the user experience.

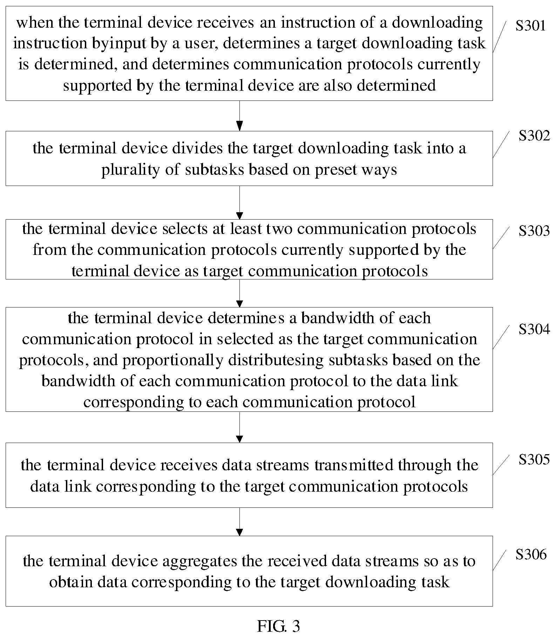

FIG. 3 is a flow diagram illustrating example operations of a method for data downloading applied to the terminal device in FIG. 1 in accordance with some embodiments.

At block S301, when the terminal device receives a downloading instruction by a user, a target downloading task is determined, and communication protocols currently supported by the terminal device are also determined.

In some embodiments, determining the communication protocols currently supported by the terminal device comprises: accessing a device management list of the terminal device; and determining which communication protocols have been recorded in the device management list. Those communication protocols in the device management list correspond to the communication protocols currently supported by the terminal device.

In some embodiments, the communication protocols currently supported by the terminal device include wireless fidelity communication protocol, cellular network communication protocol, Bluetooth communication protocol and infrared communication protocol.

At block S302, the terminal device divides the target downloading task into a plurality of subtasks based on preset ways.

At block S303, the terminal device selects at least two communication protocols from the communication protocols currently supported by the terminal device as target communication protocols.

At block S304, the terminal device determines a bandwidth of each communication protocol selected as the target communication protocols, and proportionally distributes subtasks based on the bandwidth of each communication protocol to the data link corresponding to each communication protocol.

At block S305, the terminal device receives data streams transmitted through the data link corresponding to the target communication protocols.

At block S306, the terminal device aggregates the received data streams so as to obtain data corresponding to the target downloading task.

In some embodiments, aggregating, by the terminal device, the received data streams so as to obtain data corresponding to the target downloading task, comprises: determining serial numbers of the received data streams based on serial numbers of the plurality of subtasks; joining the received data streams based on the serial numbers of the received data streams so as to obtain data corresponding to the target downloading task.

In addition, the relevant terms or explanations of embodiments of the present disclosure may refer to the contents described in the above embodiments.

It can be seen that in this embodiment, through a variety of communication protocols for target downloading task, subtasks can be proportionally distributed to each data link corresponding to the communication protocols based on the bandwidth of each communication protocol, thus improving the network concurrent transmission efficiency, shortening the downloading of task time, and improving the user experience.

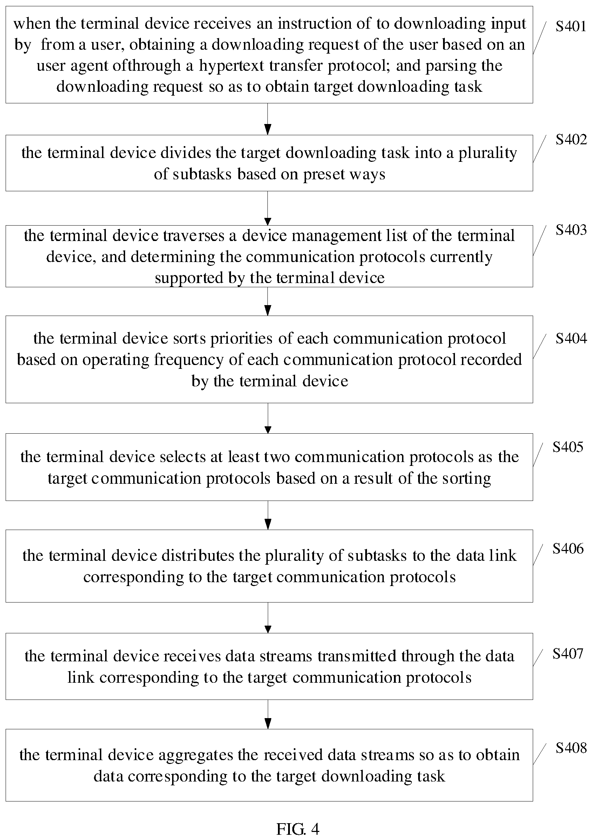

FIG. 4 is a flow diagram of a method for data downloading provided in some embodiments, can be applied to the terminal device described in FIG. 1.

At block S401, when the terminal device receives an instruction to download from a user, obtaining a downloading request of the user based on a user agent through a hypertext transfer protocol; and parsing the downloading request so as to obtain target downloading task;

At block S402, the terminal device divides the target downloading task into a plurality of subtasks based on preset ways;

At block S403, the terminal device traverses a device management list of the terminal device, and determining the communication protocols currently supported by the terminal device;

For example, the communication protocols currently supported by the terminal device include wireless fidelity communication protocol, cellular network communication protocol,

Bluetooth communication protocol, and infrared communication protocol.

At block S404, the terminal device sorts priorities of each communication protocol based on operating frequency of each communication protocol recorded by the terminal device;

At block S405, the terminal device selects at least two communication protocols as the target communication protocols based on a result of the sorting;

At block S406, the terminal device distributes the plurality of subtasks to the data link corresponding to the target communication protocols;

In some embodiments, the plurality of subtasks is assigned to the data link corresponding to the target communication protocol, including: determining a bandwidth of each communication protocol in the target communication protocols; and proportionally distributing subtasks based on the bandwidth of each communication protocol to the data link corresponding to each communication protocol.

At block S407, the terminal device receives data streams transmitted through the data link corresponding to the target communication protocols;

At block S408, the terminal device aggregates the received data streams so as to obtain data corresponding to the target downloading task.

In some embodiments, the terminal device aggregating the received data streams so as to obtain data corresponding to the target downloading task including: determining serial numbers of the received data streams based on serial numbers of the plurality of subtasks; jointing the received data streams based on the serial numbers of the received data streams so as to obtain data corresponding to the target downloading task.

In some embodiments, sorting priorities of each communication protocol based on operating frequency of each communication protocol recorded by the terminal device can be performed. In some embodiments, selecting at least two communication protocols from the communication protocols currently supported by the terminal device as target communication protocols, and distributing the plurality of subtasks to the data link corresponding to the target communication protocols may also be performed. In this way, embodiments can be used across at least two communication protocols for more subtasks parallel downloading (a high frequency of use indicating that the technology has a fast downloading speed or a high cost performance), so as to make full use of the communication capacity of the terminal device to achieve parallel downloading, thereby shortening the downloading time and improving the user experience.

The above mainly introduces the scheme of embodiments from the perspective of the execution process of the method side. In order to achieve the above functions, terminal devices contain hardware structures and/or software modules that perform the corresponding functions. Any person skilled in the art should be readily aware that the embodiments can be implemented in hardware or a combination of hardware and computer software, in combination with the units and algorithmic steps of the examples described in the embodiments. Whether a function is performed by hardware or by computer software driving hardware depends on the specific embodiment and design constraints of the technical solution. Any person skilled in the art may use different methods for each particular embodiment to achieve the functions described, but such implementation should not be considered beyond the scope of this embodiment.

This embodiment can be used to divide the functional units of terminal devices based on the above method embodiments, for example, each functional unit can be divided according to each functional unit, or two or more functions can be integrated in a downloading unit. The above integrated units can be implemented in the form of hardware or software functional units. It should be noted that the division of units in this embodiment is schematic and is only a logical function division. There may be other ways of division in the actual embodiments.

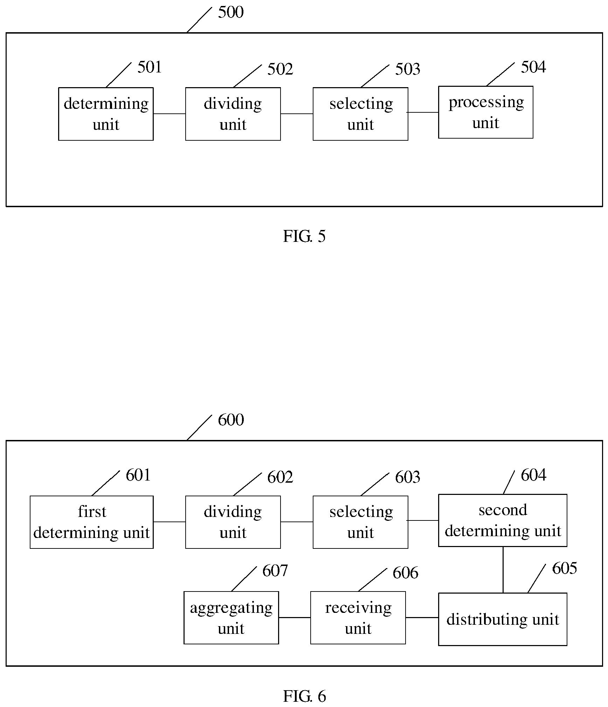

FIG. 5 is a block diagram of the functional unit composition of the downloading component 500 related to this embodiment. The downloading component 500 may be used by terminal devices and includes the following logical units.

Determining unit 501 is configured to, when receiving a downloading instruction input by a user, determine a target downloading task and determine communication protocols currently supported by the terminal device;

In some embodiments, determining the target downloading task, includes: obtaining a downloading request of the user based on a user agent through a hypertext transfer protocol; and parsing the downloading request so as to obtain target downloading task.

In some embodiments, determining communication protocols currently supported by the terminal device, includes: traversing a device management list of the terminal device; and determining the communication protocols recorded in the device management list as the communication protocols currently supported by the terminal device. The communication protocols currently supported by the terminal device comprise the wireless fidelity communication protocol, cellular network communication protocol, Bluetooth communication protocol, and infrared communication protocol.

Dividing unit 502 is configured to divide the target downloading task into a plurality of subtasks based on preset ways.

Selecting unit 503 is configured to select at least two communication protocols from the communication protocols currently supported by the terminal device as target communication protocols.

In some embodiments, selecting at least two communication protocols from the communication protocols currently supported by the terminal device as target communication protocols, includes: sorting priorities of each communication protocol based on operating frequency of each communication protocol recorded by the terminal device; and selecting at least two communication protocols as the target communication protocols based on a result of the sorting.

Downloading unit 504 is configured to download the plurality of subtasks based on the target communication protocols.

In some embodiments, the downloading unit 504 is specifically configured to distribute the plurality of subtasks to the data link corresponding to the target communication protocols; receive data streams transmitted through the data link corresponding to the target communication protocols; and aggregate the received data streams so as to obtain data corresponding to the target downloading task.

In some embodiments, distributing the plurality of subtasks to the data link corresponding to the target communication protocols, includes: determining a bandwidth of each communication protocol in the target communication protocols; and proportionally distributing subtasks based on the bandwidth of each communication protocol to the data link corresponding to each communication protocol.

In some embodiments, aggregating the received data streams so as to obtain data corresponding to the target downloading task, includes: determining serial numbers of the received data streams based on serial numbers of the plurality of subtasks; and joining the received data streams based on the serial numbers of the received data streams so as to obtain data corresponding to the target downloading task.

In some embodiments, after downloading the plurality of subtasks based on the target communication protocols, the downloading unit is further configured to be executed by the one or more processors for: determining a target duration based on a current communication protocol and a volume of the downloading task; and if not in receipt of a notification of successful downloading after the target duration, downloading the target downloading task based on the current communication protocol through a single stream.

In some embodiments, the above logical units described in this embodiment can describe the methods described in method embodiments Block S201-S204.

In some embodiments, when the terminal device receives a downloading instruction from the user, the target downloading task and the communication protocol currently supported by the terminal device are determined; the target downloading task is divided into a plurality of subtasks based on the preset ways; at least two communication protocols are selected from the communication protocols currently supported by the terminal device as the target communication protocol; and the downloading of the plurality of subtasks is carried out through the target communication protocol. Compared with the traditional single stream downloading, it can effectively improve the flexibility and intelligence of network control when downloading tasks, and can also improve the user experience.

FIG. 6 is a block diagram of the functional unit composition of the downloading component 600 related to this embodiment. The downloading component 600 is applied to terminal devices and includes the following logical units.

A first determining unit 601 is configured to, when receiving a downloading instruction input by a user, determine a target downloading task and determine communication protocols currently supported by the terminal device.

In some embodiments, determining communication protocols currently supported by the terminal device, includes: traversing a device management list of the terminal device; and determining the communication protocols recorded in the device management list as the communication protocols currently supported by the terminal device.

In some embodiments, the communication protocols currently supported by the terminal device comprise a wireless fidelity communication protocol, cellular network communication protocol, Bluetooth communication protocol, and infrared communication protocol.

Dividing unit 502 is configured to divide the target downloading task into a plurality of subtasks based on preset ways.

Selecting unit 503 is configured to select at least two communication protocols from the communication protocols currently supported by the terminal device as target communication protocols.

Second determining unit 604 is configured to determine a bandwidth of each communication protocol in the target communication protocols;

Distributing unit 605 is configured to proportionally distribute subtasks based on the bandwidth of each communication protocol to the data link corresponding to each communication protocol.

Receiving unit 606 is configured to receive data streams transmitted through the data link corresponding to the target communication protocols.

Aggregating unit 607 is configured to aggregate the received data streams so as to obtain data corresponding to the target downloading task.

In some embodiments, aggregating the received data streams so as to obtain data corresponding to the target downloading task, includes: determining serial numbers of the received data streams based on serial numbers of the plurality of subtasks; and jointing the received data streams based on the serial numbers of the received data streams so as to obtain data corresponding to the target downloading task.

The above logical units described in this embodiment can perform the methods described in Block S301-S306.

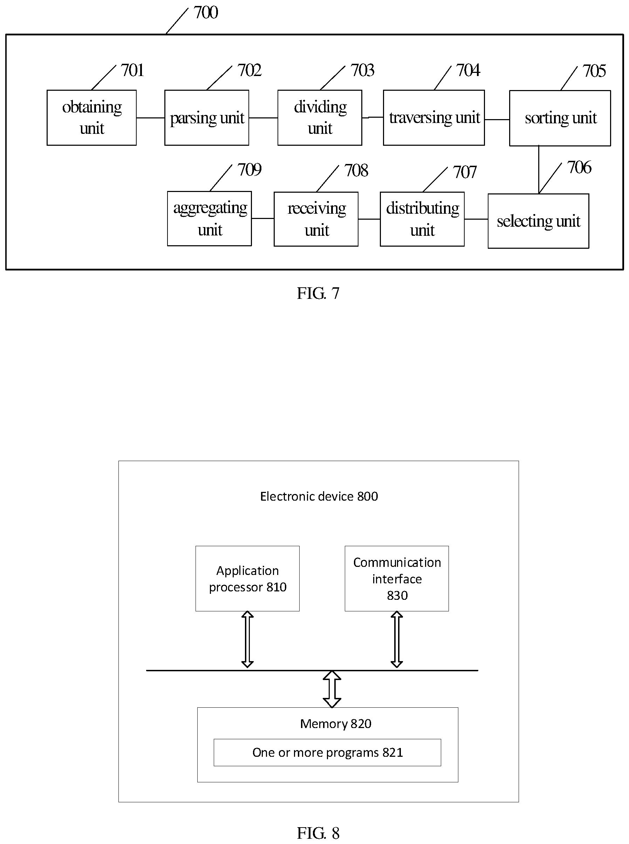

FIG. 7 is a block diagram of the functional unit composition of the downloading component 700 related to this embodiment. The downloading component 700 is applied to terminal devices and includes the following logical units:
obtaining unit 701 is configured to obtain a downloading request of the user based on a user agent through a hypertext transfer protocol;
parsing unit 702 is configured to parse the downloading request so as to obtain target downloading task;
dividing unit 703 is configured to divide the target downloading task into a plurality of subtasks based on preset ways; and
traversing unit 704 is configured to traverse a device management list of the terminal device.

For example, the communication protocols currently supported by the terminal device include a wireless fidelity communication protocol, cellular network communication protocol, Bluetooth communication protocol, and infrared communication protocol.

Sorting unit 705 is configured to sort priorities of each communication protocol based on operating frequency of each communication protocol recorded by the terminal device.

Selecting unit 706 is configured to select at least two communication protocols as the target communication protocols based on a result of the sorting.

Distributing unit 707 is configured to distribute the plurality of subtasks to the data link corresponding to the target communication protocols.

In some embodiments, distributing the plurality of subtasks to the data link corresponding to the target communication protocols, includes: determining a bandwidth of each communication protocol in the target communication protocols; and proportionally distributing subtasks based on the bandwidth of each communication protocol to the data link corresponding to each communication protocol.

Receiving unit 708 is configured to receive data streams transmitted through the data link corresponding to the target communication protocols.

Aggregating unit 709 is configured to aggregate the received data streams so as to obtain data corresponding to the target downloading task.

In some embodiments, aggregating the received data streams so as to obtain data corresponding to the target downloading task, includes: determining serial numbers of the received data streams based on serial numbers of the plurality of subtasks; and jointing the received data streams based on the serial numbers of the received data streams so as to obtain data corresponding to the target downloading task.

In accordance with the above embodiments in FIG. 2, FIG. 3 and FIG. 4, FIG. 8 is a structural schematic diagram of a terminal device 800 provided by this embodiment. As shown in FIG. 8, the terminal device 800 includes an application processor 810, a memory 820, a communication interface 830 and one or more programs 821, wherein, the one or more programs 821 is stored in the memory 820 and configured to be executed by the application processor 810. The one or more programs 821 includes instructions for performing the following steps: when receiving a downloading instruction of from a user, determining a target downloading task and determining communication protocols currently supported by the terminal device; dividing the target downloading task into a plurality of subtasks based on preset ways; selecting at least two communication protocols from the communication protocols currently supported by the terminal device as target communication protocols; and downloading the plurality of subtasks based on the target communication protocols.

Optionally, downloading the plurality of subtasks based on the target communication protocols, includes: distributing the plurality of subtasks to the data link corresponding to the target communication protocols; receiving data streams transmitted through the data link corresponding to the target communication protocols; and aggregating the received data streams so as to obtain data corresponding to the target downloading task.

Optionally, distributing the plurality of subtasks to the data link corresponding to the target communication protocols, may include: determining a bandwidth of each communication protocol in the target communication protocols; and proportionally distributing subtasks based on the bandwidth of each communication protocol to the data link corresponding to each communication protocol.

Optionally, aggregating the received data streams so as to obtain data corresponding to the target downloading task, may include: determining serial numbers of the received data streams based on serial numbers of the plurality of subtasks; and jointing the received data streams based on the serial numbers of the received data streams so as to obtain data corresponding to the target downloading task.

Optionally, determining the target downloading task, may include: obtaining a downloading request of the user based on a user agent through a hypertext transfer protocol; and parsing the downloading request so as to obtain target downloading task.

Optionally, selecting as least two communication protocols from the communication protocols currently supported by the terminal device as target communication protocols, may include: sorting priorities of each communication protocol based on operating frequency of each communication protocol recorded by the terminal device; and selecting at least two communication protocols as the target communication protocols based on a result of the sorting.

Optionally, determining communication protocols currently supported by the terminal device, may include: traversing a device management list of the terminal device; and determining the communication protocols recorded in the device management list as the communication protocols currently supported by the terminal device.

Optionally, communication protocols currently supported by the terminal device comprise a wireless fidelity communication protocol, cellular network communication protocol, Bluetooth communication protocol, and infrared communication protocol.

In some embodiments, upon receiving a downloading instruction input by the user, the target downloading task and the communication protocol currently supported by the terminal device are determined; the target downloading task is divided into a plurality of subtasks based on the preset ways; selecting at least two communication protocols from the communication protocols currently supported by the terminal device as the target communication protocol; the downloading of the plurality of subtasks is carried out through the target communication protocol. This embodiment can effectively improve the flexibility and intelligence of network control, and then improve the user experience.

Some embodiments further provide a computer-readable storage medium, wherein the computer-readable storage medium stores a computer program configured to electronic data exchanging, and wherein the computer program instructs the computer to process a part or all of steps described in any method recorded in embodiments of the above methods, the computer including electronic equipment.

Some embodiments further provide a computer program product, wherein the computer program product comprises non-transitory computer-readable storage medium storing the computer program, and the computer program is executable to instruct the computer to process a part or all of steps described in any method disclosed in/as embodiments of the above methods. The computer program product can be a software installation package, and the computer can include electronic equipment.

Related to method embodiments described above, in order to simplify descriptions, methods are expressed as series of combinations of actions, but any person skilled in the art should understand that the present disclosure is not limited by the action sequence described. That is, on the basis of the present disclosure, certain steps can use another order or certain steps can be performed simultaneously. Secondly, any person skilled in the art should also be aware that not necessarily all the actions and modules/units/components of various embodiments disclosed herein are required.

In some embodiments, the description of each embodiment has its own focus, and the parts that are not described in detail in one embodiment may be referenced in relevant descriptions of other embodiments.

In some embodiments provided in the present disclosure, the terminal device disclosed may be realized by other means. For example, the apparatus described above is only a schematic, such as the division of the unit, just as a logical functional division, the actual implementation can have other divisions, such as multiple units or components can be combined with or can be integrated into another system, or some characteristics can be ignored, or does not perform. Additionally, the coupling or direct coupling or communication connection shown or discussed between each other may be indirect coupling or communication connection through some interface, device or unit, may be electrical or otherwise.

The units described as separate parts above may or may not be physically separate, and the units shown as units may or may not be physically separate. That is, , they may be located in one place, or they may be distributed over multiple network units. Some or all of the units can be selected according to actual needs to achieve the purpose of this embodiment scheme.

The units illustrated as separate components may or may not be physically separated, and the components displayed as units may or may not be physical units, i.e., they may be located in one place or may be distributed to a plurality of network units. Some or all of these units may be selected according to actual needs to achieve the purpose of the present embodiment.

In addition, each functional unit in each embodiment of the present disclosure may be integrated into a single downloading unit, or each unit may be physically implemented separately, or two or more units may be integrated in a single unit. The above integrated units may be implemented either in the form of hardware or in the form of software functional units.

The integrated units described above, if implemented as software functional units and sold or used as stand-alone products, may be stored in a computer readable memory. Based on this understanding, the technical solution of the present disclosure may be represented in the form of a software product which is stored in a memory, includes instructions to cause a computer device (which may be a personal computer, server, or network device, etc.) to perform all or some of the steps of the above method in each embodiment of the present disclosure. The aforementioned memory includes USB flash disk, ROM (read-only memory), RAM (random-access memory), removable hard disk, floppy disk or optical disc, and other media that can store program code.

All or part of the steps in the various methods of the above embodiments which may be understood by any person skilled in the art may be accomplished by instructing the relevant hardware in a program which may be stored in a computer readable memory, the computer readable memory may include: flash disk, read-only memory (read-only memory, ROM), random-access memory, abbreviated as RAM), disk or CD, etc.

Some embodiments of the present disclosure are introduced in detail. In this specification, the principle and implementation methods of the present disclosure are described in specific cases. The above explanation of the embodiments is only used to help understand the method and core ideas of the present disclosure. At the same time, for the person skilled in the art, according to the idea of the present disclosure, there will be changes in the specific implementation and scope of usage. To sum up, the contents of this specification should not be construed as restrictions on the present disclosure.

## Claims

1. A method for data downloading, **characterized in that**, applied to a terminal device, the method comprising:
when receiving a downloading instruction input by a user, determining a target downloading task and determining communication protocols currently supported by the terminal device;
dividing the target downloading task into a plurality of subtasks based on preset ways;
selecting at least two communication protocols from the communication protocols currently supported by the terminal device as target communication protocols; and
processing the plurality of subtasks based on the target communication protocols.

2. The method of claim 1, wherein the downloading of the plurality of subtasks based on the target communication protocols, comprises:
distributing the plurality of subtasks to the data link corresponding to the target communication protocols;
receiving data streams transmitted through the data link corresponding to the target communication protocols; and
aggregating the received data streams so as to obtain data corresponding to the target downloading task.

3. The method of claim 2, wherein the distributing of the plurality of subtasks to the data link corresponding to the target communication protocols, comprises:
determining a bandwidth of each communication protocol in the target communication protocols; and
proportionally distributing subtasks based on the bandwidth of each communication protocol to the data link corresponding to each communication protocol.

4. The method of claim 3, wherein the aggregating of the received data streams so as to obtain data corresponding to the target downloading task, comprises:
determining serial numbers of the received data streams based on serial numbers of the plurality of subtasks; and
joining the received data streams based on the serial numbers of the received data streams so as to obtain data corresponding to the target downloading task.

5. The method of claim 4, wherein the determining of the target downloading task, comprises:
obtaining a downloading request of the user based on a user agent through a hypertext transfer protocol; and
parsing the downloading request so as to obtain the target downloading task.

6. The method of claim 5, wherein the selecting of the at least two communication protocols from the communication protocols currently supported by the terminal device as target communication protocols, comprises:
sorting priorities of each communication protocol based on operating frequency of each communication protocol recorded by the terminal device; and
selecting at least two communication protocols as the target communication protocols based on a result of the sorting.

7. The method of claim 6, wherein the determining communication protocols currently supported by the terminal device, comprising:
traversing a device management list of the terminal device; and
determining the communication protocols recorded in the device management list as the communication protocols currently supported by the terminal device.

8. The method of claim 7, wherein the communication protocols currently supported by the terminal device comprising wireless fidelity communication protocol, cellular network communication protocol, Bluetooth communication protocol, and infrared communication protocol.

9. The method of claim 1, further comprising, after the downloading the plurality of subtasks based on the target communication protocols:
determining a target duration based on a current communication protocol and a volume of the downloading task; and
if not receiving a notification of successful downloading after the target duration, processing the target downloading task based on the current communication protocol through a single stream.

10. A downloading apparatus, **characterized in that**, the downloading apparatus comprises, comprising:
determining unit, configured to when receiving a downloading instruction o input by a user, determining a target downloading task and determining communication protocols currently supported by the terminal device;
dividing unit, configured to divide the target downloading task into a plurality of subtasks based on preset ways;
selecting unit, configured to select at least two communication protocols from the communication protocols currently supported by the terminal device as target communication protocols; and
processing unit, configured to process the plurality of subtasks based on the target communication protocols.

11. The downloading apparatus of claim 10, wherein the processing unit is configured to:
distributing the plurality of subtasks to the data link corresponding to the target communication protocols;
receiving data streams transmitted through the data link corresponding to the target communication protocols; and
aggregating the received data streams so as to obtain data corresponding to the target downloading task.

12. The downloading apparatus of claim 11, wherein the distributing of the plurality of subtasks to the data link corresponding to the target communication protocols, comprises:
determining a bandwidth of each communication protocol in the target communication protocols; and
proportionally distributing subtasks based on the bandwidth of each communication protocol to the data link corresponding to each communication protocol.

13. The downloading apparatus of claim 11, wherein the aggregating of the received data streams so as to obtain data corresponding to the target downloading task, comprises:
determining serial numbers of the received data streams based on serial numbers of the plurality of subtasks; and
jointing the received data streams based on the serial numbers of the received data streams so as to obtain data corresponding to the target downloading task.

14. The downloading apparatus of claim 13, wherein the determining of the target downloading task, comprises:
obtaining a downloading request of the user based on a user agent through a hypertext transfer protocol; and
parsing the downloading request so as to obtain the target downloading task.

15. The downloading apparatus of claim 14, wherein the selecting of the at least two communication protocols from the communication protocols currently supported by the terminal device as target communication protocols, comprising:
sorting priorities of each communication protocol based on operating frequency of each communication protocol recorded by the terminal device; and
selecting at least two communication protocols as the target communication protocols based on a result of the sorting.

16. The terminal device of claim 14, wherein the selecting as least two communication protocols from the communication protocols currently supported by the terminal device as target communication protocols, comprising:
sorting priorities of each communication protocol based on downloading speed of each communication protocol recorded by the terminal device; and
selecting at least two communication protocols as the target communication protocols based on a result of the sorting.

17. The terminal device of claim 15, wherein the determining communication protocols currently supported by the terminal device, comprising:
traversing a device management list of the terminal device; and
determining the communication protocols recorded in the device management list as the communication protocols currently supported by the terminal device.

18. The terminal device of claim 17, wherein the communication protocols currently supported by the terminal device comprising wireless fidelity communication protocol, cellular network communication protocol, Bluetooth communication protocol, and infrared communication protocol.

19. The downloading apparatus of claim 10, wherein after the processing of the plurality of subtasks based on the target communication protocols, the processing unit further configured to:
determining a target duration based on a current communication protocol and a volume of the downloading task; and
when not receiving a notification of successful downloading after the target duration, processing the target downloading task based on the current communication protocol through a single stream.

20. A computer-readable storage medium, configured to restore a computer program, wherein the computer program instructs a computer to execute the method of anyone of claim 1 to 9.
